# EUROPÄISCHE PATENTSCHRIFT

(11) **EP 2 828 523 B1**
(45) Veröffentlichungstag und Bekanntmachung des Hinweises auf die Patenterteilung: **13.11.2019**
(21) Anmeldenummer: 13709946.1
(22) Anmeldetag: 19.03.2013
(51) Int. Cl.: F03D 13/25, E04H 12/10

(54) **OFFSHORE-TRAGSTRUKTUR FÜR WINDENERGIEANLAGEN, SOWIE STABWERKELEMENT FÜR SELBIGE**
OFFSHORE SUPPORTING STRUCTURE FOR WIND ENERGY INSTALLATIONS AND FRAMEWORK ELEMENT FOR SAME
STRUCTURE PORTEUSE OFFSHORE POUR ÉOLIENNES AINSI QU'ÉLÉMENT D'OSSATURE POUR CELLES-CI

(30) Priorität: 19.03.2012 DE 202012002729 U
(43) Veröffentlichungstag der Anmeldung: 28.01.2015
(73) Patentinhaber: thyssenkrupp Steel Europe AG, 47166 Duisburg (DE)
(72) Erfinder: REALES BERTOMEO, Emilio, 27753 Delmenhorst (DE)
(74) Vertreter: Eisenführ Speiser
(86) Internationale Anmeldenummer: PCT/EP2013/055738
(87) Internationale Veröffentlichungsnummer: WO 2013/139815

(56) Entgegenhaltungen:
- DE-U1-202011 101 599
- FR-A- 708 054
- US-A- 1 498 124
- US-A- 4 612 750

## Beschreibung

Die vorliegende Erfindung betrifft eine Offshore-Tragstruktur für Windenergieanlagen, mit mehreren zueinander beabstandeten Horizontalringen und mehreren zwischen den Horizontalringen angeordneten, jeweils benachbarte Horizontalringe abstützende Stabwerkelemente, die jeweils an endseitigen Schnittpunkten mit einem Horizontalring verbunden sind. Die horizontale Ausrichtung ist hierbei in Bezug zur normalen Aufstell-Orientierung der Tragstruktur zu verstehen. Dies gilt in gleichem Maße für weiter unten verwendete Orts- und Abstandsangaben wie oben, unten, vertikal etc.. Unter einem Ring wird im Rahmen dieser Ausführungen eine in sich geschlossene Struktur verstanden, die bogenförmig oder auch polygonförmig gewählt sein kann, abhängig vom jeweils gewählten Aufbau der Tragstruktur. Unter den endseitigen Schnittpunkten zwischen den Stabwerkelementen und dem Horizontalring sind jene Bereiche der Tragstruktur zu verstehen, in welchen die Stabwerkelemente mit dem jeweils zugewandten Horizontalring kraft-, form- oder stoffschlüssig verbunden werden.

Seit einiger Zeit werden Windenergieanlagen nicht nur "On-Shore", also an Land, sondern verstärkt auf dem Meer "Offshore" installiert, beispielsweise in sogenannten Offshore-Windparks in der Nord- und Ostsee. Die Offshore-Windenergieanlagen sind extremen Bedingungen ausgesetzt. Sie werden beispielsweise in 20 bis 60 Metern Meerestiefe mit Hilfe eines Fundaments verankert. Das Fundament, welches auch als Tragstruktur bezeichnet werden kann, ist hohen mechanischen und chemischen Belastungen sowie Meeresströmungen ausgesetzt. Verschiedene Typen von Offshore-Fundamenten sind bekannt, beispielsweise Monopile-, Jacket-, Tripod-, Tripile- oder Bucket-Konstruktionen. Die vorliegende Erfindung betrifft in erster Linie eine sogenannte Jacket-Konstruktion. Diese ist eine Fachwerkkonstruktion, vorzugsweise aus Stahl.

Bei bekannten Offshore-Tragstrukturen für Windenergieanlagen werden die die Horizontalringe abstützenden Stabwerkelemente häufig in Form zweier miteinander verschränkter und ähnlich der Form eines Andreaskreuzes miteinander verschweißter Streben ausgeführt. Hierzu werden üblicherweise mehrere Strebensegmente im Bereich der Überkreuzung miteinander verschweißt. Hierzu werden auf engem Raum zwangsläufig viele Schweißnähte angesetzt, die im spitzen Winkel aufeinander zulaufen. Eine derartige Verbindung der Streben des Stabwerkelements zur Versteifung der Stabwerkelemente hat den Nachteil, dass die Schweißnähte stark beansprucht werden und somit ein großes Risiko des Materialversagens in Kauf genommen werden muss. Gerade bei Offshore-Tragstrukturen ist die Möglichkeit zur Reparatur allerdings stark eingeschränkt und der dafür zu betreibende Aufwand beträchtlich.

Das Dokument US4612750, das als nächstliegender Stand der Technik angesehen wird, offenbart eine Struktur und ein Stabwerkelement gemäß dem Oberbegriff der Ansprüche 1 bzw. 11.

Vor diesem Hintergrund lag der vorliegenden Erfindung die Aufgabe zugrunde, eine Offshore-Tragstruktur anzugeben, welche eine ausreichende Stabilität gewährleistet, und gleichzeitig weniger schadensanfällig ist.

Die Erfindung löst die ihr zugrunde liegende Aufgabe bei einer Offshore-Tragstruktur der eingangs genannten Art, indem eines, mehrere oder sämtliche Stabwerkelemente zwei oder mehr unverschränkte Streben aufweisen, welche abschnittsweise oder vollständig bogenförmig gekrümmt sind.

Die Erfindung macht sich hierbei die Erkenntnis zunutze, dass das zumindest abschnittsweise bogenförmige Krümmen zweier Streben es ermöglicht, die Streben so anzuordnen, dass diese der Form eines Kreuzes zwar ähneln, allerdings hierbei lediglich aneinander angenähert sind und nicht verschränkt werden müssen. Demzufolge müssen die Schenkel des Stabwerkelements nicht miteinander auf aufwendige Weise verschweißt werden, bzw. die Zahl der notwendigen Schweißnähte kann drastisch reduziert werden. Durch die bogenförmige Krümmung der Stabwerkelemente wird zudem die Kraftverteilung innerhalb des Stabwerks der Tragstruktur insgesamt homogenisiert.

Es hat sich überraschend herausgestellt, dass die eigentlich zu erwartende Abnahme der Steifigkeit infolge der bogenförmigen Krümmung insbesondere in vertikaler Richtung die Stabilität der Tragstruktur insgesamt nicht signifikant beeinträchtigt. Zudem stehen zahlreiche bevorzugte Ausführungsformen zur Verfügung, um die Stabilität der Struktur noch weiter zu verbessern, wie sich aus den nachfolgenden Ausführungen ergibt.

Gemäß einer vorteilhaften Weiterbildung der erfindungsgemäßen Tragstruktur sind die Streben jeweils eines Stabwerkelements derart aufeinander ausgerichtet, dass zwischen ihnen in einem Bereich zwischen zwei benachbarten Horizontalringen ein geringerer Abstand besteht als zwischen den mit einem Horizontalring verbundenen endseitigen Schnittpunkten. Die endseitigen Schnittpunkte stehen bei dieser Art der Ausrichtung der unverschränkten, bogenförmig gekrümmten Streben in ähnlicher Weise winklig voneinander ab, wie sie es bei einer kreuzförmigen Verschränkung tun würden. Die Streben bei sind vorzugweise symmetrischer Ausgestaltung in ihrer Mitte am nächsten aneinander angenähert.

Vorzugsweise sind die Streben jeweils eines Stabwerkelements mittels eines oder mehrerer Verbindungselemente miteinander verbunden, insbesondere versteift. Insbesondere sind die Streben mit dem oder den Verbindungselementen fest verbunden, besonders bevorzugt mittels Schweißen. Vorzugsweise sind die Streben aus HFI-Rohren zusammengesetzt. HFI steht hierbei für Hochfrequenz-Induktionsschweißen. Solche Rohre sind auf einfache Art und Weise herstellbar, indem Bleche gewalzt, zu Rohren gebogen und anschließend mit einer längsverlaufenden HFI-Schweißnaht geschlossen werden. Derartige Rohre sind gut verfügbar und kostengünstig. Aber auch nahtlos gewalzte Rohre und spiralnaht geschweißte Rohre sind bevorzugt. Nahtlose Rohre haben den Vorteil, dass sie keine Schweißnaht aufweisen und daher keine Materialeigenschaftsabschwächung durch die Schweißnaht aufweisen. Auch Spiralnahtgeschweißte Rohre erfüllen die technischen notwendigen Erfordernisse.

In einer bevorzugten Ausführungsform der Erfindung ist das bzw. sind die Verbindungselemente in solchen Bereichen mit den Streben verbunden, die zu einem Punkt des geringsten Abstands zwischen den Streben jeweils eines Stabwerkelements vertikal beabstandet sind.

Besonders bevorzugt liegt hierbei der Punkt des geringsten Abstands in dem Bereich der bogenförmigen Krümmung der Streben.

Weiter vorzugsweise sind in einer bevorzugten Ausführungsform die Streben des oder der Stabwerkelemente jeweils unterteilt in eine Vertikalaufnahme und zwei mit der Vertikalaufnahme verbundene Schenkel. Besonders bevorzugt wird es, wenn die Vertikalaufnahmen und/oder die Schenkel bogenförmig gekrümmt sind. Die Vertikalaufnahme ist dazu eingerichtet, mit den Schenkeln der Streben verbunden zu werden, beispielsweise durch Aufschieben auf ein Doppelrohr und anschließendes Verschweißen. Je nach Anforderung an die Stabilität sind die Schenkel der unterteilten Streben gerade oder gekrümmt ausgebildet.

Gemäß einer weiteren bevorzugten Ausbildung der Tragstruktur ist das bzw. sind die Verbindungselemente rohrförmig und im Wesentlichen horizontal ausgerichtet. Dabei können die Verbindungselemente einen zylindrischen oder auch einen polygonalen Rohrquerschnitt aufweisen, beispielsweise einen Vierkant-Querschnitt.

Gemäß einer weiteren Ausführungsform der Tragstruktur ist das bzw. sind die Verbindungselemente plattenförmig ausgebildet. Unter einer plattenförmigen Ausbildung wird hierbei das Vorsehen von Versteifungsblechen verstanden, die sich vorzugsweise oberhalb und unterhalb des Punkts des geringsten Abstandes zwischen den Streben von einer Strebe zu der gegenüberliegenden Strebe erstrecken.

Vorzugsweise ist das bzw. sind die Verbindungselemente mit den Streben des Stabwerkelements verbunden, vorzugsweise mittels Orbitalschweißen.

Alternativ oder zusätzlich sind vorzugsweise das oder die Verbindungselemente mit den Vertikalaufnahmen des Stabwerkelements verbunden, vorzugsweise mittels Orbitalschweißen.

Bei der erfindungsgemäßen Tragstruktur ist vorzugsweise die bogenförmige Krümmung der Streben und/oder der Vertikalaufnahmen abschnittsweise oder vollständig kreisbogenförmig und/oder parabelförmig, und/oder ellipsenförmig ausgebildet.

Der bogenförmige Krümmungsverlauf kann in Abhängigkeit des Lastverhaltens auch abschnittsweise aus verschiedenen Bogenformen zusammengesetzt sein.

Die Erfindung betrifft zudem ein Stabwerkelement zur Verwendung in einer wie vorstehend beschriebenen Tragstruktur gemäß einer bevorzugten Ausführungsform der Erfindung. Die Erfindung löst die ihr zugrunde liegende Aufgabe bei einem Stabwerkelement der vorstehenden genannten Art, indem dies zwei Streben aufweist, welche abschnittsweise oder vollständig bogenförmig gekrümmt sind. Weitere vorteilhafte Ausgestaltungen des erfindungsgemäßen Stabwerkelements ergeben sich aus den Unteransprüchen sowie den vorstehenden Erläuterungen im Zusammenhang mit der Tragstruktur gemäß der Erfindung.

Im Folgenden wird die Erfindung anhang bevorzugter Ausführungsformen und unter Bezugnahme auf die beigefügten Figuren näher erläutert. Hierbei zeigen:
Fig. 1 eine Offshore-Tragstruktur gemäß einem ersten Ausführungsbeispiel,
Fig. 2 eine Detailansicht eines Stabwerkelements für eine Offshore-Tragstruktur gemäß einer ersten bevorzugten Ausführungsform der Erfindung, und
Fig. 3 eine weitere Detailansicht einer Offshore-Tragstruktur gemäß einer zweiten bevorzugten Ausführungsform.

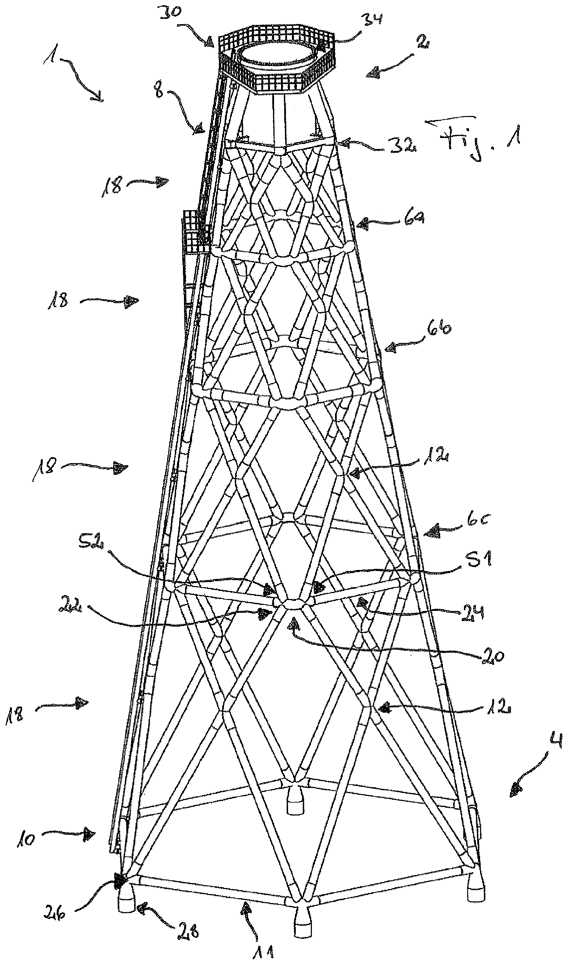

Gemäß Fig. 1 weist eine Offshore-Tragstruktur 1 ein Kopfende 2 sowie ein Fußende 4 auf. Zwischen dem Kopfende 2 und dem Fußende 4 sind mehrere Horizontalringe 6a, 6b, 6c (insgesamt mit 6 bezeichnet) angeordnet. Diese sind in einer üblichen Aufstellungsweise der Tragstruktur 1 (wie in Fig. 1 gezeigt) im Wesentlichen horizontal ausgerichtet, d.h. eine Zentralachse der Horizontalringe 6 ist im Wesentlichen vertikal ausgerichtet. Die Horizontalringe 6 sind im Wesentlichen konzentrisch zueinander und beabstandet voneinander angeordnet. Am oberen Ende ist ein Kopfring 8 konzentrisch zu den Horizontalringen 6 angeordnet. Am Fußende 4 ist ein Grundring 10 ebenfalls im Wesentlichen konzentrisch zu den Horizontalringen 6 angeordnet. Zwischen den Horizontalringen 6 sowie zwischen dem untersten Horizontalring 6c und dem Grundring und dem obersten Horizontalring 6a und dem Kopfring 8 ist eine Mehrzahl an Stabwerkelementen 12 (in Fig. 1 nur eins mit Bezugszeichen versehen) angeordnet.

In jeder Etage 18 der Tragstruktur 1, die durch die Horizontalringe 6 definiert sind, sind gemäß diesem Ausführungsbeispiel (Fig. 1) jeweils sechs Stabwerkelemente 12 vorgesehen. Diese sind im Wesentlichen ringförmig benachbart zueinander und leicht schräg bezogen auf eine Vertikalachse angeordnet, so dass jede Etage 18 und die Tragstruktur 1 insgesamt eine nach oben hin verjüngte Konfiguration aufweist. Alternativ weist die Tragstruktur eine Konfiguration mit im Wesentlichen konstantem Umfang auf. Die einzelnen Etagen 18 weisen im Wesentlichen einen sechseckigen Querschnitt auf, da sechs Stabwerkelemente 12 je Etage 18 vorgesehen sind. Daher weisen auch die Horizontalringe 6 eine im Wesentlichen sechseckige Grundform auf. Alternativ weist die Tragstruktur keine sechseckige Grundform auf, sondern andere polygonale Grundformen, beispielsweise drei-, vier-, fünf-, sieben- oder achteckige Grundformen. Weiter weist eine Tragstruktur gemäß der Erfindung optional eine kreisbogenförmige Grundform bezüglich der Horizontalringe auf. Optional sind die Ecken durch kreisbogenförmig gekrümmte Abschnitte 20 ersetzt. Gemäß einer Ausführungsform (Fig. 1) ist der kreisbogenförmig gekrümmte Abschnitt 20 in einem Verbindungs-Knoten 22 ausgebildet. Der kreisbogenförmig gekrümmte Abschnitt 20 ist zwischen den Schnittpunkten S1, S2 zweier benachbarter Schenkel zweier benachbarter Stabwerkelemente 12 ausgebildet. Die Schnittpunkte S1, S2 sind beabstandet voneinander. Auch wenn in Fig. 1 nur ein gekrümmter Abschnitt 20 sowie zwei Schnittpunkte S1, S2 mit Bezugszeichen versehen sind, soll verstanden werden, dass solche gekrümmten Abschnitte 20 zwischen jedem der Schnittpunkte zweier Schenkel 14 zweier benachbarter Stabwerkelemente 12 vorgesehen sind.

Der Abschnitt zwischen den Schnittpunkten jeweils zweier Schenkel desselben Stabwerkelements 12 mit dem entsprechenden Horizontalring 6b, 6c ist gemäß diesem Ausführungsbeispiel nicht gekrümmt, sondern gerade ausgebildet. Dazu ist zwischen den entsprechenden Verbindungs-Knoten 22 (in Fig. 1 nur eines mit Bezugszeichen versehen) ein gerades Rohr 24 (in Fig. 1 nur eines mit Bezugszeichen versehen) angeordnet. Demnach wechseln sich umlaufend in einem Horizontalring 6 gemäß diesem Ausführungsbeispiel jeweils ein kreisbogenförmig gekrümmter Abschnitt 20 und ein gerades Rohr 24 ab.

Der Grundring 10 besteht gemäß dieser Ausführungsform im Wesentlichen aus geraden Rohren 11, die mittels Fußknoten 26 mit sechs entsprechenden Stabwerkelementen 12 verbunden sind. Der Grundring 10 weist gemäß dieser Ausführungsform keinen gekrümmten Abschnitt auf. An den Fußknoten 26 sind Füße 28 angeordnet, mittels derer die Tragstruktur 1 beispielsweise mit einem Betonfundament oder Rammpfählen (beides in den Figuren nicht gezeigt) verbindbar ist, um diese auf dem Meeresgrund fest zu verankern. Die Fußknoten können beispielsweise wie in DE 20 2011 101 599 U1 offenbart ausgebildet sein.

An dem Kopfende 2 der Tragstruktur 1 ist eine Schnittstelle 30 für die Aufnahme einer Windenergieanlage angeordnet. Die Schnittstelle 30 ist dazu mit den oberen Knoten 32 mit der obersten Etage 18 verbunden. An der Schnittstelle 30 ist zudem eine Arbeitsplattform 34 angeordnet. An dieser Arbeitsplattform 34 können beispielsweise Serviceboote anlegen, mit denen Servicemitarbeiter zu der Tragstruktur 1 fahren, um eine an dieser angeordnete Windenergieanlage zu warten.

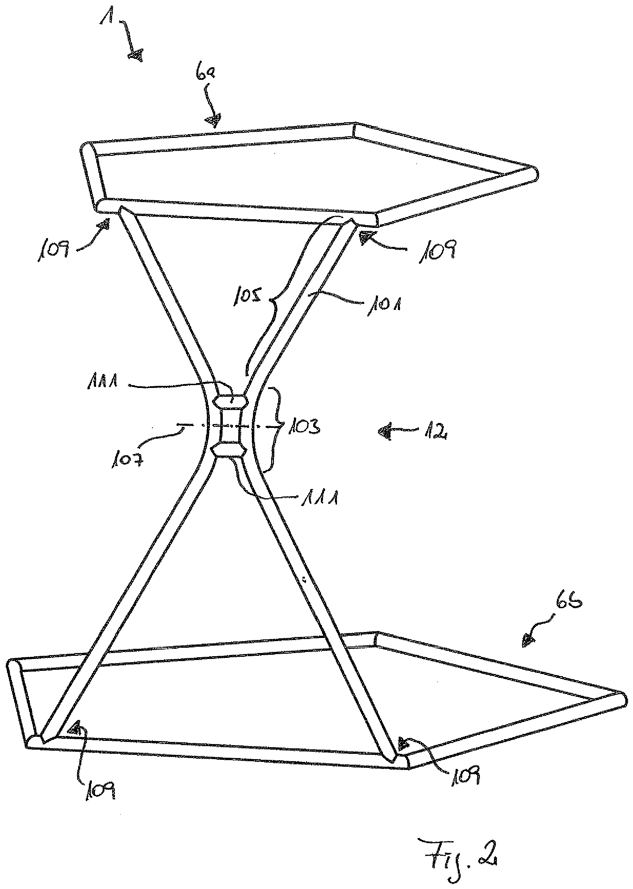

Fig. 2 zeigt eine isolierte Darstellung eines Stabwerkelements 12 zwischen zwei benachbart angeordneten Horizontalringen 6a, 6b. Der einfacheren Darstellung halber sind weitere Stabwerkelemente in Fig. 2 nicht dargestellt. Das Stabwerkelement 12 gemäß Fig. 2 weist zwei Streben 101 auf. Die Streben 101 sind abschnittsweise bogenförmig gekrümmt. Der Abschnitt der Krümmung ist mit Bezugszeichen 103 veranschaulicht. An den bogenförmig gekrümmten Bereich 103 schließt sich bei beiden Streben beidseitig jeweils ein gerader Abschnitt 105 an. Gemäß einer alternativen Ausführungsform kann dieser Abschnitt 105 auch bogenförmig gekrümmt sein, entweder in gleicher Weise wie der bogenförmig gekrümmte Abschnitt 103 oder mit anderer Krümmung.

Die Streben 101 des Stabwerkelements 12 sind so aufeinander ausgerichtet, dass sie an einem Punkt, der im Bereich der bogenförmigen Krümmung 103 liegt, einen geringsten Abstand zueinander einnehmen. Die jeweiligen Punkte sind durch Linie 107 miteinander verbunden dargestellt.

Die Streben 101 des Stabwerkelements 12 sind jeweils an endseitigen Schnittpunkten 109 mit den von ihnen abgestützten Horizontalringen 6a, 6b verbunden, vorzugsweise mittels Schweißen, besonders bevorzugt mittels Orbitalschweißen. In einem Bereich zwischen den endseitigen Fußpunkten, in welchem auch der Punkt des geringsten Abstandes zwischen den Streben 101 angeordnet ist, befinden sich zum zusätzlichen Versteifen des Stabwerkelements 12 gemäß Fig. 2 zwei Verbindungselemente 111. Die Verbindungselemente 111 gemäß Ausführungsform aus Fig. 2 sind rohrförmig ausgebildete und horizontal ausgerichtete Stützelemente, welche die beiden Streben 101 miteinander verbinden. Die Verbindungselemente 111 sind jeweils vertikal von dem Punkt des geringsten Abstandes zu der jeweils gegenüberliegenden Strebe 101 beabstandet. Alternativ können auch weniger oder mehr als zwei Verbindungselemente, insbesondere eins, drei oder vier Verbindungselemente zum Versteifen der Streben 101 eingesetzt werden.

Vorteilhaft an der Ausgestaltung gemäß Fig. 2 ist insbesondere, dass die Verbindungselemente zum Fixieren an den Streben 101 nur jeweils kurze Schweißnähte erfordern. Zudem sind die Schweißnähte voneinander beabstandet. Zusammen mit der bogenförmigen Krümmung im Bereich 103 der Streben 101 ist die Belastung der Schweißnähte bei annähernd gleicher Steifigkeit des Stabwerkelements 12 im Vergleich zu den aus dem Stand der Technik bekannten Verbindungs-Kreuzen mit verschränkten Streben und/oder in der Mitte zusammengeschweißten Streben deutlich reduziert.

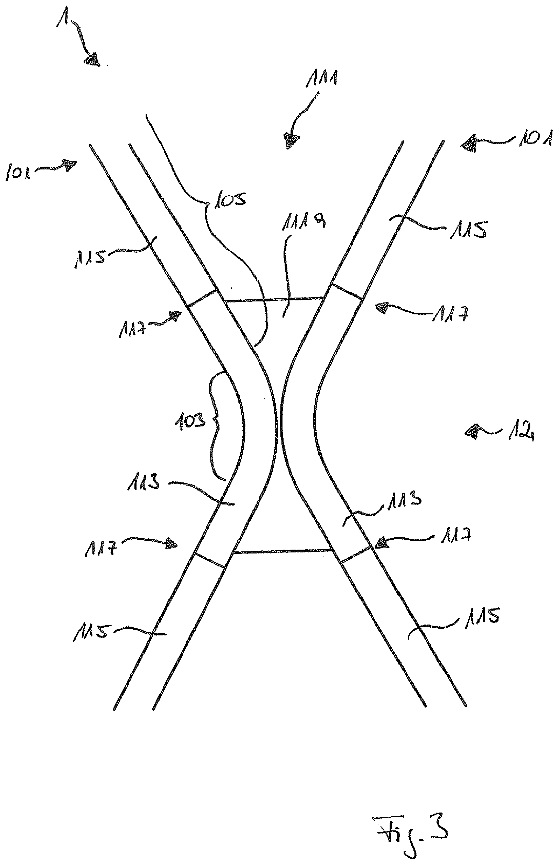

Die in Fig. 3 gezeigte Anordnung gleicht hinsichtlich einiger struktureller Merkmale der Ausführungsform gemäß Fig. 2, weswegen für gleiche oder identische Elemente dieselben Bezugszeichen vergeben sind. Diesbezüglich wird auch auf die obigen Ausführungen verwiesen. Die Ausführung des Stabwerkelements gemäß Fig. 3 unterscheidet sich von der Darstellung in Fig. 2 dadurch, dass als Verbindungselement 111 nicht mehrere rohrförmige Elemente gewählt sind, sondern eine durchgehende Verbindungsplatte 111a vorgesehen ist. Die Verbindungsplatte 111a ist beidseitig mit den Streben 101 verbunden, vorzugsweise verschweißt, besonders bevorzugt mittels Orbitalschweißen. Die Verbindungsplatte erstreckt sich gemäß Fig. 3 auch in dem Bereich der bogenförmigen Krümmung 103. Optional kann (nicht dargestellt) der Bereich des geringsten Abstandes zwischen den Streben 101 in der Platte 111a ausgespart sein, bzw. kann diese optional zweiteilig ausgebildet werden, wobei jener Bereich nach Verbinden der Verbindungsplatte 111a mit den Streben 101 freibleibt.

Für die Ausführungsform gemäß Fig. 3 können einteilige Streben, wie bei Fig. 2 gezeigt, verwendet werden. Alternativ ist auch die in Fig. 3 gezeigte Variante bevorzugt. Gemäß dieser Variante sind die Streben 101 unterteilt in eine Vertikalaufnahme 113 und jeweils zwei endseitig mit der Vertikalaufnahme 113 verbundene Schenkel 115. Die Bereiche der Verbindung zwischen der Vertikalaufnahme und den Schenkel sind angedeutet durch Bezugszeichen 117. Die Schenkel 115 und die Vertikalaufnahme 113 können optional stirnseitig verschweißt werden, oder mittels einer Doppelrohrkonstruktion aufeinander aufgeschoben werden und anschließend zur Sicherung zusätzlich verschweißt werden.

Wenngleich nicht alle technischen Merkmale in Bezug sowohl auf Fig. 2 als auch Fig. 3 gezeigt sind, sondern sich einige bevorzugte Ausführungsformen nur in Fig. 2 oder Fig. 3 wiederspiegeln, so ist doch der Gesamtinhalt dieser Ausführungen dieser Art zu verstehen, dass jegliche in den Figuren gezeigten Merkmale auch mit den in den anderen Figuren gezeigten Merkmalen kombinierbar sind.

## Patentansprüche

1. Offshore-Tragstruktur (1) für Windenergieanlagen, mit
mehreren zueinander beabstandeten Horizontalringen und mehreren zwischen den Horizontalringen angeordneten, jeweils benachbarte Horizontalringe abstützende Stabwerkelemente, die jeweils an endseitigen Schnittpunkten mit einem Horizontalring verbunden sind,
wobei eines, mehrere oder sämtliche Stabwerkelemente zwei unverschränkte Streben aufweisen, welche abschnittsweise oder vollständig bogenförmig gekrümmt sind, **dadurch gekennzeichnet, dass** die Streben jeweils eines Stabwerkelements mittels eines oder mehrerer Verbindungselemente miteinander versteift sind, wobei das oder die Verbindungselemente in solchen Bereichen mit den Streben verbunden sind, die zu einem Punkt des geringsten Abstands zwischen den Streben jeweils eines Stabwerkelements vertikal beabstandet sind.

2. Tragstruktur nach Anspruch 1.
**dadurch gekennzeichnet, dass** die Streben jeweils eines Stabwerkelements derart aufeinander ausgerichtet sind, dass zwischen ihnen in einem Bereich zwischen zwei benachbarten Horizontalringen ein geringerer Abstand besteht als zwischen den mit einem Horizontalring verbundenen endseitigen Schnittpunkten.

3. Tragstruktur nach Anspruch 1 oder 2,
**dadurch gekennzeichnet, dass** der Punkt des geringsten Abstands in dem Bereich der bogenförmigen Krümmung liegt.

4. Tragstruktur nach einem der vorstehenden Ansprüche,
**dadurch gekennzeichnet, dass** die Streben des oder der Stabwerkelemente jeweils unterteilt sind in eine Vertikalaufnahme und zwei mit der Vertikalaufnahme verbundene Schenkel.

5. Tragstruktur nach Anspruch 4,
**dadurch gekennzeichnet, dass** die Vertikalaufnahmen und/oder die Schenkel bogenförmig gekrümmt sind.

6. Tragstruktur nach einem der vorstehenden Ansprüche,
**dadurch gekennzeichnet, dass** das oder die Verbindungselemente rohrförmig, und im Wesentlichen horizontal ausgerichtet sind.

7. Tragstruktur nach einem der vorstehenden Ansprüche,
**dadurch gekennzeichnet, dass** das oder die Verbindungselemente plattenförmig sind.

8. Tragstruktur nach einem der Ansprüche 3 bis 7,
**dadurch gekennzeichnet, dass** das oder die Verbindungselemente mit den Streben des Stabwerkelements verbunden sind, vorzugsweise mittels HFI-Schweißen.

9. Tragstruktur nach einem der Ansprüche 5 bis 8,
**dadurch gekennzeichnet, dass** das oder die Verbindungselemente mit den Vertikalaufnahmen des Stabwerkelements verbunden sind, vorzugsweise mittels Orbitalschweißen.

10. Tragstruktur nach einem der vorstehenden Ansprüche,
**dadurch gekennzeichnet, dass** die bogenförmige Krümmung der Streben und/oder der Vertikalaufnahme abschnittsweise oder vollständig
- kreisbogenförmig, und/oder
- parabelförmig, und/oder
- ellipsenförmig ausgebildet ist.

11. Stabwerkelement zur Verwendung in einer Tragstruktur nach einem der Ansprüche 1 bis 9,
welches zwei unverschränkte Streben, welche abschnittsweise oder vollständig bogenförmig gekrümmt sind umfasst,
**dadurch gekennzeichnet, dass** die Streben jeweils eines Stabwerkelements mittels eines oder mehrerer Verbindungselemente miteinander versteift sind, wobei das oder die Verbindungselemente in solchen Bereichen mit den Streben verbunden sind, die zu einem Punkt des geringsten Abstands zwischen den Streben jeweils eines Stabwerkelements vertikal beabstandet sind.

12. Stabwerkelement nach Anspruch 11,
**dadurch gekennzeichnet, dass** die Streben des Stabwerkelements mittels eines oder mehrerer Verbindungselemente miteinander versteift sind.

13. Stabwerkelement nach Anspruch 11,
**dadurch gekennzeichnet, dass** es nach mindestens einem der Merkmale des kennzeichnenden Teils der Ansprüche 2-10 ausgebildet ist.

## Claims

1. Offshore supporting structure (1) for wind energy installations, comprising
a plurality of spaced-apart horizontal rings and a plurality of framework elements arranged between the horizontal rings, said framework elements supporting respectively adjacent horizontal rings and in each case being connected to a horizontal ring at terminal points of intersection,
wherein one, some or all framework elements comprise two uncrossed struts which are partially or completely curved in an arc-shaped manner,
**characterized in that** the struts of a respective framework element are braced with one another by means of one or more connecting elements, wherein the connecting element(s) are connected to the struts in such regions which are spaced vertically from a point of smallest spacing between the struts of a respective framework element.

2. Supporting structure according to claim 1,
**characterized in that** the struts of a respective framework element are oriented relative to one another in such a way that a smaller spacing exists therebetween in a region between two adjacent horizontal rings than between the terminal points of intersection connected to a horizontal ring.

3. Supporting structure according to claim 1 or 2,
**characterized in that** the point of smallest spacing lies in the region of the arc-shaped curvature.

4. Supporting structure according to one of the preceding claims,
**characterized in that** the struts of the framework element(s) are each divided into a vertical receiving means and two limbs connected to the vertical receiving means.

5. Supporting structure according to claim 4,
**characterized in that** the vertical receiving means and/or the limbs are curved in an arc-shaped manner.

6. Supporting structure according to one of the preceding claims,
**characterized in that** the connecting element(s) are tubular and are oriented substantially horizontally.

7. Supporting structure according to one of the preceding claims,
**characterized in that** the connecting element(s) are plate-shaped.

8. Supporting structure according to one of claims 3 to 7,
**characterized in that** the connecting element(s) are connected to the struts of the framework element, preferably by means of HFI welding.

9. Supporting structure according to one of claims 5 to 8,
**characterized in that** the connecting element(s) are connected to the vertical receiving means of the framework element, preferably by means of orbital welding.

10. Supporting structure according to one of the preceding claims,
**characterized in that** the arc-shaped curvature of the struts and/or of the vertical receiving means is partially or completely formed
- in the shape of an arc of a circle, and/or
- in the shape of a parabola, and/or
- in the shape of an ellipse.

11. Framework element for use in a supporting structure according to one of claims 1 to 9, comprising two uncrossed struts which are partially or completely curved in an arc-shaped manner,
**characterized in that** the struts of a respective framework element are braced with one another by means of one or more connecting elements, wherein the connecting elements are connected to the struts in such regions which are spaced vertically from a point of smallest spacing between the struts of a respective framework element.

12. Framework element according to claim 11,
**characterized in that** the struts of the framework element are braced with one another by means of one or more connecting elements.

13. Framework element according to claim 11,
**characterized in that** said framework element is configured according to at least one of the features of the characterizing part of claims 2 to 10.

## Revendications

1. Structure porteuse marine (1) pour des éoliennes, avec
plusieurs anneaux horizontaux espacés les uns des autres et plusieurs éléments d'ossature disposés entre les anneaux horizontaux, soutenant respectivement des anneaux horizontaux contigus, qui sont raccordés respectivement aux points d'intersection côté extrémité à un anneau horizontal,
dans laquelle un, plusieurs ou tous les éléments d'ossature présentent deux entretoises non entrecroisées qui sont courbées en forme d'arc par endroits ou complètement, **caractérisée en ce que** les entretoises respectivement d'un élément d'ossature sont rigidifiées les unes aux autres au moyen d'un ou de plusieurs éléments de raccordement, dans laquelle le ou les éléments de raccordement sont raccordés dans de telles zones aux entretoises qui sont espacées verticalement en un point de la distance la plus faible entre les entretoises respectivement d'un élément de d'ossature.

2. Structure porteuse selon la revendication 1,
**caractérisée en ce que** les entretoises respectivement d'un élément d'ossature sont orientées les unes sur les autres de telle manière qu'il existe une distance plus faible entre elles dans une zone entre deux anneaux horizontaux contigus qu'entre les points d'intersection côté extrémité raccordés à un anneau horizontal.

3. Structure porteuse selon la revendication 1 ou 2,
**caractérisée en ce que** le point de la distance la plus faible se trouve dans la zone de la courbure en forme d'arc.

4. Structure porteuse selon l'une quelconque des revendications précédentes,
**caractérisée en ce que** les entretoises du ou des éléments d'ossature sont réparties respectivement dans un logement vertical et deux branches raccordées au logement vertical.

5. Structure porteuse selon la revendication 4,
**caractérisée en ce que** les logements verticaux et/ou les branches sont courbées en forme d'arc.

6. Structure porteuse selon l'une quelconque des revendications précédentes,
**caractérisée en ce que** le ou les éléments de raccordement sont orientés en forme de tube, et sensiblement horizontalement.

7. Structure porteuse selon l'une quelconque des revendications précédentes,
**caractérisée en ce que** le ou les éléments de raccordement sont en forme de plaque.

8. Structure porteuse selon l'une quelconque des revendications 3 à 7,
**caractérisée en ce que** le ou les éléments de raccordement sont raccordés aux entretoises de l'élément d'ossature, de préférence par soudage HFI.

9. Structure porteuse selon l'une quelconque des revendications 5 à 8,
**caractérisée en ce que** le ou les éléments de raccordement sont raccordés aux logements verticaux de l'élément d'ossature, de préférence par soudage orbital.

10. Structure porteuse selon l'une quelconque des revendications précédentes,
**caractérisée en ce que** la courbure en forme d'arc des entretoises et/ou du logement vertical est réalisée par endroits ou complètement
- en forme d'arc de cercle, et/ou
- en forme de parabole, et/ou
- en forme d'ellipse.

11. Elément d'ossature pour l'utilisation dans une structure porteuse selon l'une quelconque des revendications 1 à 9 qui comprend deux entretoises non entrecroisées qui sont courbées en forme d'arc par endroits ou complètement,
**caractérisé en ce que** les entretoises respectivement d'un élément d'ossature sont rigidifiées les unes aux autres au moyen d'un ou de plusieurs éléments de raccordement, dans lequel le ou les éléments de raccordement sont raccordés dans de telles zones aux entretoises qui sont espacées verticalement en un point de la distance la plus faible entre les entretoises respectivement d'un élément de d'ossature.

12. Elément d'ossature selon la revendication 11,
**caractérisé en ce que** les entretoises de l'élément d'ossature sont rigidifiées les unes aux autres au moyen d'un ou de plusieurs éléments de raccordement.

13. Elément d'ossature selon la revendication 11,
**caractérisé en ce qu'**il est réalisé selon au moins l'une des caractéristiques de la partie caractérisante des revendications 2 à 10.
